# FASCICULE DE BREVET EUROPEEN

(11) **EP 1 375 880 B1**
(45) Date de publication et mention de la délivrance du brevet: **08.03.2006**
(21) Numéro de dépôt: 03291462.4
(22) Date de dépôt: 17.06.2003
(51) Int. Cl.: F02D 41/14, F02D 33/02, F02D 43/04

(54) **Procédé et système de contrôle de fonctionnement d'un moteur à combustion interne de véhicule automobile**
Steuerungssystem und Verfahren für eine Brennkraftmaschine
Method and system for controlling an internal combustion engine

(30) Priorité: 18.06.2002 FR 0207496
(43) Date de publication de la demande: 02.01.2004
(73) Titulaire: Renault s.a.s., 92100 Boulogne Billancourt (FR)
(72) Inventeur: Besnard, Jean Jacques, 75014 Paris (FR); Caron, Arnaud, 78730 St. Arnoult en Yvelines (FR); Cruchet, Jérôme, 91650 Breuillet (FR); Santangeli, Vincent, 91790 Boissy Sous Saint Yon (FR)

(56) Documents cités:
- EP-A- 0 685 638
- DE-A- 19 753 996
- US-A- 4 459 808
- US-A- 5 408 974

## Description

L'invention concerne les moteurs à combustion interne de véhicules automobiles et, en particulier, les procédures de protection thermomécanique de tels moteurs.

Plus particulièrement, l'invention concerne un procédé et un système de contrôle du fonctionnement du moteur, permettant de limiter la charge du moteur en fonction de son point de fonctionnement.

Les procédures de protection thermomécanique, appelées également « limitation de pleine charge » consistent, de manière conventionnelle, à limiter les performances du moteur en fonction du régime en cours du moteur. Le document US 5,408,974 révèle une telle procédure.

Cette limitation des performances peut, par exemple, consister en une limitation de la quantité de carburant injectée ou en une limitation de couple.

De telles stratégies de protection sont essentiellement basées sur le principe selon lequel les principales grandeurs thermomécaniques du moteur, telles que la pression maximale dans les cylindres, la température du collecteur d'échappement, ..., qui définissent les limites de fonctionnement acceptables pour le moteur, sont reproductibles pour des points de fonctionnement identiques, c'est-à-dire des points définis par un couple régime de fonctionnement/charge.

Ainsi, en imposant un niveau de charge maximale en fonction du régime, on garantit le maintien des grandeurs thermomécaniques en dessous de leur valeur critique, ce qui permet de limiter la charge du moteur à une valeur inférieure à une valeur à partir de laquelle la fiabilité du moteur risque d'être altérée.

Or, comme on le sait, les gaz d'échappement des moteurs à combustion interne contiennent des espèces chimiques nocives que l'on traite couramment en dotant les lignes d'échappement de systèmes de filtration capables de retenir les particules véhiculées par les gaz d'échappement et de transformer les espèces chimiques nocives contenues dans ces gaz en substances non polluantes.

L'utilisation dans la ligne d'échappement de certains éléments, tels qu'un filtre à particules, est susceptible de provoquer des variations de contre-pression dans la ligne d'échappement, indépendamment du point de fonctionnement.

Une telle variation de contre-pression provoque des variations consécutives des grandeurs thermomécaniques définissant les limites acceptables pour le moteur, en particulier la température dans le collecteur d'échappement, qui sont elles aussi indépendantes du point de fonctionnement.

Dès lors, de telles variations ne peuvent pas être prises en compte selon les techniques classiques de protections thermomécaniques. Il existe dès lors un risque que les variations de ces grandeurs thermomécaniques provoquent un fonctionnement du moteur au-delà de la charge maximale admissible.

A ce jour, un tel risque ne peut être évité qu'en pilotant le moteur avec une marge de sécurité relativement importante, de manière à limiter sa charge à une valeur très en dessous de la charge maximale admissible, pour le point de fonctionnement considéré.

Le but de l'invention est donc de pallier cet inconvénient et de fournir un système et un procédé de contrôle du fonctionnement d'un moteur permettant de protéger le moteur, même dans le ca où certains de ses paramètres de fonctionnement, qui ont une influence sur la charge du moteur, varient indépendamment du point de fonctionnement du moteur.

A cet effet, selon l'invention, il est proposé un procédé de contrôle du fonctionnement d'un moteur à combustion interne de véhicule automobile, comprenant les étapes de calcul de la charge maximale admissible du moteur en fonction du régime de fonctionnement du moteur et de limitation de la charge du moteur à la charge maximale admissible calculée.

Selon une caractéristique générale de ce procédé, au cours de l'étape de calcul de la charge maximale admissible du moteur on extrait d'une cartographie stockée en mémoire dans un calculateur de commande du fonctionnement du moteur ladite valeur maximale de charge en fonction du régime du moteur et d'au moins un paramètre de fonctionnement du moteur susceptible de modifier le niveau de charge du moteur indépendamment du point de fonctionnement dudit moteur.

Selon un mode de mise en oeuvre de ce procédé, l'étape de calcul de la charge maximale du moteur comporte en outre une étape de filtrage dudit au moins un paramètre

De préférence, l'étape de filtrage est mise en oeuvre au moyen d'un filtre du premier ordre.

Selon un mode de mise en oeuvre particulier, ledit paramètre de fonctionnement du moteur est constitué par le niveau de pression en amont d'une turbine d'un turbocompresseur de suralimentation du moteur en air.

En variante, ledit paramètre de fonctionnement du moteur est constitué par la richesse du mélange air-carburant en amont d'une turbine d'un turbocompresseur de suralimentation du moteur en air.

Ce paramètre de fonctionnement du moteur peut encore être constitué par le débit d'air dans un collecteur d'admission d'air dans le moteur ou par le niveau de pression dans un collecteur d'admission d'air dans le moteur.

Selon l'invention, il est également proposé un système de contrôle du fonctionnement d'un moteur à combustion interne d'un véhicule automobile, comprenant un calculateur de commande du fonctionnement du moteur comportant des moyens de calcul de la charge maximale admissible du moteur en fonction du régime de fonctionnement du moteur et des moyens pour limiter la charge du moteur à la charge maximale admissible calculée.

Ces moyens de calcul de la charge maximale admissible du moteur comportent une cartographie stockée en mémoire dans le calculateur, dans laquelle sont stockées un ensemble de valeurs maximales de charge en fonction du régime du moteur et d'au moins un paramètre du fonctionnement du moteur susceptible de modifier le niveau de charge du moteur, indépendamment du point de fonctionnement de ce dernier.

D'autres buts, caractéristiques et avantages de l'invention apparaîtront à la lecture de la description suivante, donnée uniquement à titre d'exemple non limitatif, et faite en référence aux dessins annexés, sur lesquels :
- la figure 1 est un schéma synoptique illustrant l'architecture générale d'un moteur à combustion interne pourvu d'un système de contrôle conforme à l'invention ; et
- la figure 2 est un schéma synoptique illustrant la limitation de la charge du moteur selon un procédé de contrôle conforme à l'invention.

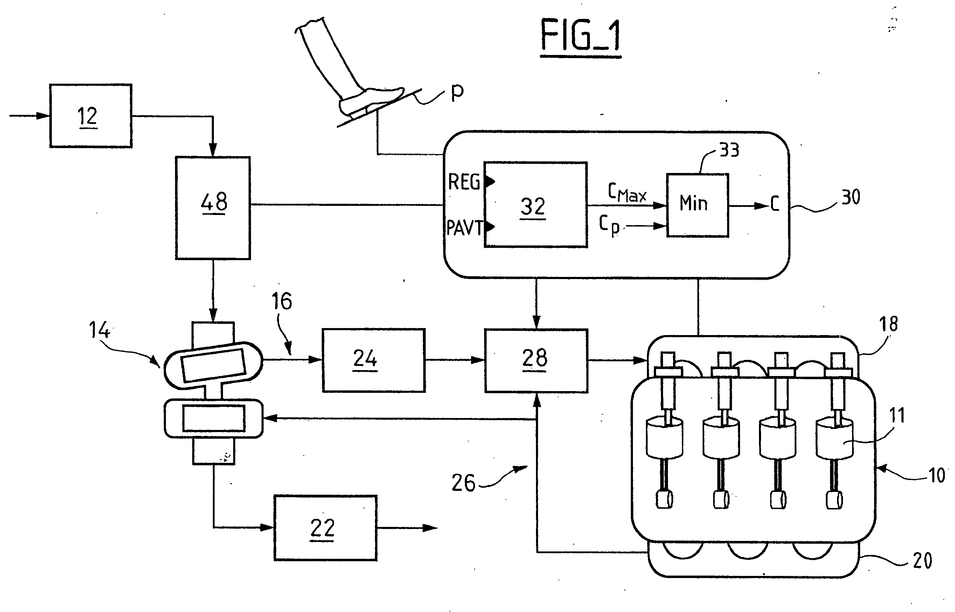

Sur la figure 1, on a représenté un schéma synoptique illustrant la structure générale d'un moteur à combustion interne, ses moyens d'alimentation en air et d'échappement des gaz de combustion, ainsi que ses moyens de pilotage.

Sur cette figure 1, la référence numérique générale 10 désigne, de façon très schématique, le carter du moteur, lequel comporte, dans l'exemple considéré, quatre cylindres 11.

Comme on le voit sur cette figure, le circuit d'admission d'air frais dans le moteur 10 comporte essentiellement un filtre à air 12 alimentant, par l'intermédiaire d'un compresseur 14, et de conduites 16 appropriées, le collecteur d'admission 18 du moteur 10.

En ce qui concerne le collecteur d'échappement 20, celui-ci récupère les gaz d'échappement issus de la combustion et évacue ces derniers vers l'extérieur, par l'intermédiaire du compresseur 14 et d'un filtre à particules 22.

Un échangeur thermique 24 fonctionnel, équipant la conduite 16 d'alimentation, est disposé en relation d'échange thermique avec les gaz d'échappement, de manière à récupérer une partie des calories véhiculées par ces derniers.

Le moteur 10 est en outre associé à un circuit 26 de recirculation des gaz d'échappement, servant à réinjecter une partie de ces gaz dans le collecteur d'admission 18.

Ce circuit de recirculation 26 est équipé d'une soupape de réglage du flux de gaz d'échappement recirculés, pilotée par une unité centrale de contrôle électronique 30 dûment programmée, de manière à réguler la quantité de gaz recirculés autour d'une valeur de consigne, calculée par l'unité centrale 30 pour limiter la quantité d'oxyde d'azote produit tout en évitant la formation de fumées dans les gaz d'échappement.

L'unité centrale 30 incorpore tous les moyens matériel et logiciel permettant de gérer le fonctionnement du moteur, notamment la quantité de carburant injecté, l'instant d'allumage du moteur, la vanne de recirculation 28, ou encore la loi de levée des soupapes, notamment en fonction du couple demandé par le conducteur au moyen de la pédale d'accélération P.

Par ailleurs, le calculateur 30 est pourvu de moyens permettant de limiter la charge du moteur afin d'éviter que la charge du moteur se situe au-delà d'une limite admissible à partir de laquelle la fiabilité de ce dernier risque d'être altérée.

A cet effet, le calculateur 30 comporte, stockée en mémoire, une cartographie 32 dans laquelle sont stockées un ensemble de valeurs de charge maximale admissible, sous la forme d'un niveau maximum de carburant injecté ou de couple délivré par le moteur, en fonction du point de fonctionnement du moteur. A partir d'une valeur de charge maximale extraite de la cartographie pour le point de fonctionnement du moteur, le calculateur contrôle le fonctionnement du moteur, de manière connue en soi, de manière à éviter que la charge dépasse cette valeur de seuil.

Ces valeurs de charge maximale sont obtenues par apprentissage ou essai préalable et sont disponibles pour chaque couple de paramètres constitué par le régime de fonctionnement REG du moteur et la pression avant turbine PAVT du turbocompresseur de suralimentation du moteur en air.

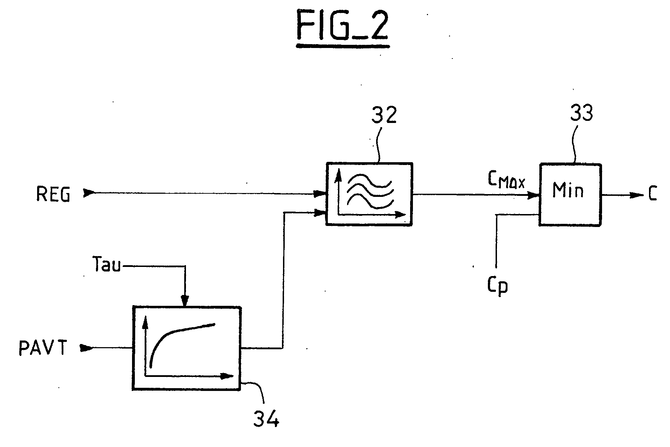

Ainsi, en se référant également à la figure 2, en fonction du régime en cours REG du moteur et de la pression avant turbine PAVT, qui est délivrée par un capteur de mesure approprié ou issue d'un modèle, l'unité centrale 30 extrait de la cartographie 32 une valeur de charge maximale C_{Max}. Un module de calcul 33 additionnel qui reçoit en entrée la valeur extraite de la cartographie 32 et une valeur de consigne CP correspondant à une sollicitation du conducteur et élabore une valeur de charge C à partir de laquelle le moteur est piloté. Cette valeur de charge C est calculée en calculant la valeur minimale entre la valeur de consigne CP et la valeur extraite de la cartographie.

Comme on le conçoit, cette stratégie de protection permet, d'une part, de limiter la charge du moteur en fonction de son régime de fonctionnement, et, d'autre part, en fonction de paramètres de fonctionnement susceptibles d'influer sur les contraintes thermomécaniques du moteur, indépendamment de son point de fonctionnement.

Ainsi, par exemple, comme indiqué précédemment, la présence du filtre à particules 22 dans la ligne d'échappement du moteur engendre une augmentation de la contre-pression à l'échappement, ce qui entraîne une augmentation de la pression en amont de la turbine du turbo-compresseur 14 et donc une augmentation directe de la température en amont de cette turbine, en raison du fait que le rapport entre le niveau de pression et le niveau de température reste constant. Une telle augmentation a également pour effet d'augmenter le taux de gaz brûlés recirculés, une augmentation consécutive de la richesse du mélange gazeux et un accroissement de la température en amont de la turbine.

Ainsi, on limite la charge, d'une part, en fonction du régime du moteur, et, d'autre part, en fonction de la pression avant la turbine.

On notera que, dans ce cas, comme visible sur la figure 2, dans la mesure où la pression est une variable relativement dynamique et que la température en amont de la turbine est une variable variant relativement lentement, on utilise un filtre du premier ordre 34 pour s'affranchir de cette vitesse de variation relative entre la pression et la température en amont de cette turbine, et pour lequel une durée de filtrage Tau peut être réglée.

Comme on le conçoit, grâce à l'invention, il est possible de maintenir la charge du moteur à un niveau inférieur à des valeurs maximales admissibles, pour chaque point de fonctionnement considéré, et ce, en tenant compte du régime du moteur et de paramètres de fonctionnement indépendants du point de fonctionnement du moteur.

On notera néanmoins que l'invention n'est pas limitée au mode de réalisation décrit.

En effet, dans l'exemple de réalisation décrit précédemment, la stratégie de protection thermomécanique du moteur est basée sur une limitation en fonction du régime et de la pression avant turbine, laquelle est filtrée au moyen d'un filtre du premier ordre.

On notera néanmoins qu'une telle stratégie s'applique également lorsque le calculateur 30 met en oeuvre une stratégie de limitation de pression en amont de la turbine. Dans un tel cas, une augmentation de la contre-pression à l'échappement entraîne une ouverture des ailettes de la turbine, ce qui provoque une diminution consécutive de la pression dans le collecteur d'admission, et donc une diminution du débit d'air. Une telle diminution engendre une augmentation de la richesse du mélange air-carburant et donc une augmentation de la température en amont de la turbine.

Dans ce cas, le niveau de charge maximale peut être élaboré en fonction du régime de fonctionnement du moteur et de la richesse du mélange air-carburant en amont de la turbine, ou du débit d'air, ou encore de la pression dans le collecteur d'admission.

Comme on le conçoit, dans ce cas, on utilise une cartographie 32 dans laquelle les valeurs de charge maximale pour le moteur sont définies, pour chaque point de fonctionnement, en fonction de ces paramètres.

## Revendications

1. Procédé de contrôle du fonctionnement d'un moteur à combustion interne de véhicule automobile, comprenant les étapes de calcul de la charge maximale admissible du moteur en fonction du régime de fonctionnement du moteur et de limitation de la charge du moteur à la charge maximale admissible calculée, **caractérisé en ce qu'**au cours de l'étape de calcul de la charge maximale admissible du moteur on extrait d'une cartographie (32) stockée en mémoire dans un calculateur (30) de commande du fonctionnement du moteur ladite valeur maximale (C_{Max}) de charge en fonction du régime du moteur et d'au moins un paramètre de fonctionnement du moteur susceptible de modifier le niveau de charge du moteur indépendamment du point de fonctionnement dudit moteur.

2. Procédé de contrôle selon la revendication 1, **caractérisé en ce que** l'étape de calcul de la charge maximale du moteur comporte en outre une étape de filtrage dudit au moins un paramètre.

3. Procédé de contrôle selon la revendication 2, **caractérisé en ce que** l'étape de filtrage est mise en oeuvre au moyen d'un filtre du premier ordre (34).

4. Procédé de contrôle selon l'une quelconque des revendications 1 à 3, **caractérisé en ce que** ledit paramètre de fonctionnement du moteur est constitué par le niveau de pression en amont d'une turbine d'un turbocompresseur (14) de suralimentation du moteur en air.

5. Procédé de contrôle selon l'une quelconque des revendications 1 à 3, **caractérisé en ce que** ledit paramètre de fonctionnement du moteur est constitué par la richesse du mélange air-carburant en amont d'une turbine d'un turbocompresseur (14) de suralimentation du moteur en air.

6. Procédé de contrôle selon l'une quelconque des revendications 1 à 3, **caractérisé en ce que** ledit paramètre de fonctionnement du moteur est constitué par le débit d'air dans un collecteur (18) d'admission d'air dans le moteur.

7. Procédé de contrôle selon l'une quelconque des revendications 1 à 3, **caractérisé en ce que** ledit paramètre de fonctionnement du moteur est constitué par le niveau de pression dans un collecteur (18) d'admission d'air dans le moteur.

8. Système de contrôle du fonctionnement d'un moteur à combustion interne de véhicule automobile, comprenant un calculateur (30) de commande du fonctionnement du moteur comportant des moyens de calcul (32) de la charge maximale admissible du moteur en fonction du régime de fonctionnement du moteur et des moyens pour limiter la charge du moteur à la charge maximale admissible calculée, **caractérisé en ce que** les moyens de calcul de la charge maximale admissible du moteur comportent une cartographie (32) stockée en mémoire dans le calculateur, dans laquelle sont stockées un ensemble de valeurs maximales de charge en fonction du régime du moteur et d'au moins un paramètre de fonctionnement du moteur susceptible de modifier le niveau de charge du moteur indépendamment du point de fonctionnement du moteur.

## Claims

1. A method of controlling the operation of a motor vehicle internal combustion engine comprising the steps of calculating the maximum admissible charge of the engine in dependence on the operating condition of the engine and limiting the charge of the engine to the calculated maximum admissible charge, **characterised in that** in the course of the step of calculating the maximum admissible charge of the engine there are extracted from a mapping (32) stored in memory in a management computer (30) of the engine said maximum charge value (C_{Max}) in dependence on the operating condition of the engine and at least one operating parameter of the engine which is capable of modifying the level of charge of the engine independently of the operating point of said engine.

2. A control method according to claim 1 **characterised in that** the step of calculating the maximum charge of the engine further comprises a step of filtering said at least one parameter.

3. A control method according to claim 2 **characterised in that** the filtering step is effected by means of a first-order filter (34).

4. A control method according to any one of claims 1 to 3 **characterised in that** said operating parameter of the engine is formed by the pressure level upstream of a turbine of a turbocompressor (14) for a boost feed of air to the engine.

5. A control method according to any one of claims 1 to 3 **characterised in that** said operating parameter of the engine is formed by the richness of the air-fuel mixture upstream of a turbine of a turbocompressor (14) for a boost feed of air to the engine.

6. A control method according to any one of claims 1 to 3 **characterised in that** said operating parameter of the engine is formed by the flow rate of air in a manifold (18) for the induction of air into the engine.

7. A control method according to any one of claims 1 to 3 **characterised in that** said operating parameter of the engine is formed by the pressure level in a manifold (18) for the induction of air into the engine.

8. A system for controlling the operation of a motor vehicle internal combustion engine comprising an engine management computer (30) comprising means (32) for calculating the maximum admissible charge of the engine in dependence on the operating condition of the engine and means for limiting the charge of the engine to the calculated maximum admissible charge, **characterised in that** the means for calculating the maximum admissible charge of the engine comprise a mapping (32) stored in memory in the computer, in which are stored an assembly of maximum charge values in dependence on the operating condition of the engine and at least one operating parameter of the engine which is capable of modifying the level of charge of the engine independently of the operating point of the engine.

## Patentansprüche

1. Verfahren zur Steuerung des Betriebs eines Verbrennungsmotors eines Kraftfahrzeugs, aufweisend die Schritte einer Berechnung der maximal zulässigen Last des Motors in Abhängigkeit von der Betriebsdrehzahl des Motors und einer Beschränkung der Motorlast auf die maximal zulässige, berechnete Last, **dadurch gekennzeichnet, dass** man im Verlaufe des Schritts einer Berechnung der maximal zulässigen Last des Motors aus einem Kennfeld (32), das in einem Speicher in einem Steuerungsrechner (30) des Motorbetriebs gespeichert ist, den maximalen Wert (C_{Max}) der Last in Abhängigkeit von der Drehzahl des Motors und von mindestens einem Betriebsparameter des Motors entnimmt, welcher fähig ist, das Lastniveau des Motors unabhängig vom Betriebspunkt des Motors zu verändern.

2. Steuerungsverfahren nach Anspruch 1, **dadurch gekennzeichnet, dass** der Schritt einer Berechnung der maximalen Last des Motors des Weiteren einen Schritt einer Filterung des mindestens einen Parameters aufweist.

3. Steuerungsverfahren nach Anspruch 2, **dadurch gekennzeichnet, dass** der Schritt der Filterung mittels eines Filters der ersten Ordnung (34) umgesetzt wird.

4. Steuerungsverfahren nach irgendeinem der Ansprüche 1 bis 3, **dadurch gekennzeichnet, dass** der Betriebsparameter des Motors durch das Druckniveau stromaufwärts einer Turbine eines Turboladers (14) zur Aufladung des Motors mit Luft gebildet wird.

5. Steuerungsverfahren nach irgendeinem der Ansprüche 1 bis 3, **dadurch gekennzeichnet, dass** der Betriebsparameter des Motors durch den Gehalt der Luft-Kraftstoff-Mischung stromaufwärts einer Turbine eines Turboladers (14) zur Aufladung des Motors mit Luft gebildet wird.

6. Steuerungsverfahren nach irgendeinem der Ansprüche 1 bis 3, **dadurch gekennzeichnet, dass** der Betriebsparameter des Motors durch den Luftdurchsatz in einem Lufteinlasskrümmer (18) in dem Motor gebildet wird.

7. Steuerungsverfahren nach irgendeinem der Ansprüche 1 bis 3, **dadurch gekennzeichnet, dass** der Betriebsparameter des Motors durch das Druckniveau in einem Lufteinlasskrümmer in dem Motor gebildet wird.

8. Steuerungssystem des Betriebs eines Verbrennungsmotors eines Kraftfahrzeugs, aufweisend einen Rechner (30) zur Steuerung des Betriebs des Motors, aufweisend Mittel zur Berechnung (32) der maximal zulässigen Last des Motors in Abhängigkeit von der Betriebsdrehzahl des Motors und Mittel zum Begrenzen der Last des Motors auf die maximal zulässige, berechnete Last, **dadurch gekennzeichnet, dass** die Mittel zur Berechnung der maximal zulässigen Last des Motors ein Kennfeld (32) aufweisen, das in einem Speicher in dem Rechner gespeichert ist, in welchem eine Gesamtheit von maximalen Werten der Last in Abhängigkeit von dem Betrieb des Motors und von mindestens einem Betriebsparameter des Motors, welcher fähig ist, das Lastniveau des Motors unabhängig vom Betriebspunkt des Motors zu verändern, gespeichert sind.
